# EUROPEAN PATENT SPECIFICATION

(11) **EP 3 974 664 B1**
(45) Date of publication and mention of the grant of the patent: **29.11.2023**
(21) Application number: 20197713.9
(22) Date of filing: 23.09.2020
(51) Int. Cl.: F16B 25/00

(54) **LOW-WEAR SCREWSTRUCTURE**
VERSCHLEISSARME SCHRAUBSTRUKTUR
STRUCTURE DE VIS À FAIBLE USURE

(43) Date of publication of application: 30.03.2022
(73) Proprietor: Bi-Mirth Corp., Kaohsiung County (TW)
(72) Inventor: SHIH, Yi-Chieh, Kaohsiung City (TW)
(74) Representative: 2K Patentanwälte Blasberg Kewitz & Reichel

(56) References cited:
- EP-A1- 0 939 235
- DE-A1-102017 103 526
- US-A- 2 263 137
- US-A1- 2015 010 374
- Anonymous: "LEITFADEN ZUR AUSSENGEWINDEFERTIGUNG Technologie und Rahmenbedingungen", WAGNER TOOLINGSYSTEMS BAUBLIES GMBH, 1 January 2020 (2020-01-01), pages 1-32, XP093027607, Retrieved from the Internet: URL:www.baublies-group.com [retrieved on 2023-02-28]
- Walzl Alexander: "Additive Manufacturing zur Herstellung von Umformwerkzeugen", Master Thesis, 1 March 2015 (2015-03-01), pages 1-67, XP093027596,
- Kirichek A. V. ET AL: "Werkstofffluss beim Gewindewalzen", Umformtechnik-Whitepaper, 1 January 2014 (2014-01-01), pages 1-8, XP093027553,

## Description

### FIELD OF THE INVENTION

The invention relates to a screw, in particular to a low-wear screw structure capable of reaming and reducing thread wear.

### BACKGROUND OF THE INVENTION

When a wood screw is locked into wood with high hardness, which has a high density and provides a relatively strong resistance, the friction force between the screw teeth of the wood screw and the wood block is gradually increased in the screwing process, so that the wood screw needs more and more force to be locked into the wood. Therefore, abrasion of the screw teeth is easy to occur, and the wood screw may be unfavorably locked into the wood. The wood screw also needs more and more force to be locked into the wood, and a wood crack may easily occur. Accordingly, there is a need for a solution to these problems.

EP 0 939 235 A1 discloses a wood screw according to the preamble of claim 1, having shaft part and a tip. There is at least one cutter in the tip region. A thread extends at least partly over the shaft and tip. The cutter is formed on at least one rib projecting from the core diameter of the shaft part. It has a smaller angle than the thread to the longitudinal axis of the screw. The thread runs to the tip. The screw has a rib-free conical end sector, over which the thread extends. The first thread at the reaming part is not provided with a plurality of sawtooth cutting edges at an outer periphery thereof.

US 2015/010374 A1 discloses another wood screw, wherein the wood-crew thread is provided with notches in order to improve the cutting behavior of the wood screw. The notches are provided at a section where knurls are provided.

### SUMMARY OF THE INVENTION

It is an object of the present invention to provide a low-wear screw structure that can locked or screwed into wood easily and in a convenient manner.

This problem is solved by a low-wear screw structure as claimed by claim 1. Further advantageous embodiments are the subject-matter of the dependent claims.

Compared with the prior art, the invention has the following beneficial effects:
1. According to the low-wear screw structure of the present disclosure, the first included angle and the second included angle of the crushing rib are different, and the angle value of the first included angle is greater than the angle value of the second included angle, so that sawdust between threads of the crushing rib can be rapidly broken when the crushing rib is locked into wood, the screwing-in torque force when the first thread is locked is reduced, and the wear generated when the first thread is locked is reduced.
2. According to the first thread of the present disclosure, the diameter width of the first bottom diameter of the rod extension part is different from the diameter width of the second bottom diameter of the reaming part, so that the outer diameter width of the first thread of the first thread is the same as that of the rod extension part and the reaming part, and an operator can lock the first thread into wood easily.

### BRIEF DESCRIPTION OF THE DRAWINGS

Fig. 1 is a three-dimensional schematic view of a first embodiment of a low-wear screw structure of the present disclosure.
Fig. 2A is a schematic side view of the first embodiment of the low-wear screw structure of the present disclosure..
Fig. 2B is an enlarged partial view of the circle of Fig. 2A.
Fig. 2C is a schematic cross-sectional view taken along line 2C-2C of Fig. 2A.
Fig. 2D is a partially enlarged view of the circle of Fig. 2C.
Fig. 3A is a schematic cross-sectional view of the circle of Fig. 2A.
Fig. 3B a partially enlarged view of the circle of Fig. 3A.
Fig. 4A is a schematic side view of a second embodiment of the low-wear screw structure of the present disclosure.
Fig. 4B is a schematic cross-sectional view taken along line 4B-4B of Fig. 4A.
Fig. 5A is a schematic side view of a third embodiment of the low-wear screw structure of the present disclosure.
Fig. 5B is a schematic cross-sectional view taken along line 5B-5B of Fig. 5A.
Fig. 5C is an enlarged schematic view of the circle of Fig. 5B.
Fig. 6 is a partially enlarged perspective view of the screw head of Fig. 5A.
Fig. 7 is a partial side view of the rod body of a fourth embodiment of the low-wear screw structure of the present disclosure.
Fig. 8 is a partial side view of the rod body of a fifth embodiment of the low-wear screw structure of the present disclosure.
Fig. 9 is a partial side view of the rod body of a sixth embodiment of the low-wear screw structure of the present disclosure.
Fig. 10 is a three dimensional schematic view of a seventh embodiment of the low-wear screw structure of the present disclosure.

### DETAILED DESCRIPTION OF THE PREFERRED EMBODIMENTS

Reference will now be made in detail to the preferred embodiments for the technical features and modes of operation of the present application, examples of which are illustrated in the accompanying drawings for review. Moreover, the drawings are not necessarily drawn to scale in order to facilitate explanation, and are not intended to limit the scope of the invention for protection.

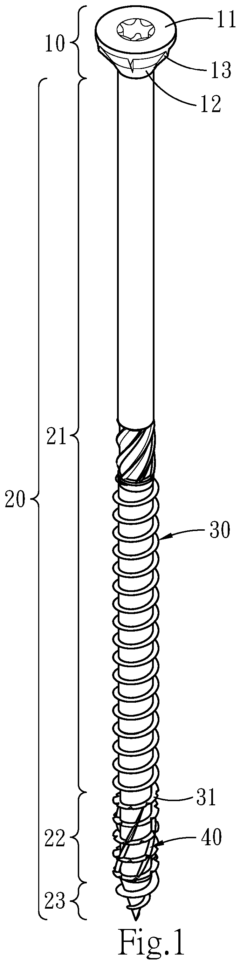

With regard to the technology of the present disclosure, with reference to Figs. 1-3, the present disclosure provides a first embodiment of a low-wear screw structure consisting essentially of a screw head 10, a rod body 20, a first thread 30 and at least a crushing rib 40. The low-wear screw structure of the present disclosure is primarily, but not exclusively, useful for securing or engaging wooden workpieces, such as wooden floors, wooden furniture, and the like.

The screw head 10, as shown in Fig. 1 to Fig. 3B, comprises a top 11 and a neck 12 extending from the top 11 and tapering away from the top 11, the neck 12 being provided with a plurality of ribs 13 which, when locked into a wooden workpiece, enhance the embedability with the wooden workpiece.

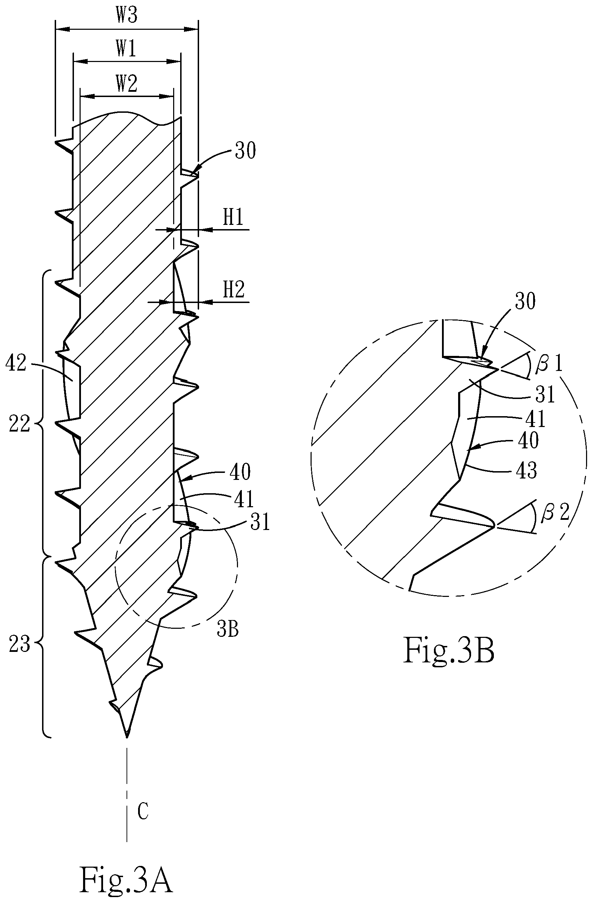

The rod body 20 extends from the neck 12 of the screw head 10 and includes a rod extension part 21 connected to the neck 12, a reaming part 22 connected to the rod extension part 21, and a taper part 23 connected to an other side of the reaming part 22. With reference to Fig. 3A, the rod extension part 21 has a first bottom diameter W1, and the reaming part 22 has a second bottom diameter W2, wherein a diameter width of the first bottom diameter W1 of the rod extension part 21 is different from a diameter width of the second bottom diameter W2 of the reaming part 22, and the diameter width of the second bottom diameter W2 is greater than zero and smaller than the diameter width of the first bottom diameter W1.

The first thread 30 is annularly arranged on an outer peripheral surface of the rod body 20 at a distance from the taper part 23 to the rod extension part 21 through the reaming part 22, wherein the first thread 30 has a first height H1 at the rod extension part 21, and the first thread 30 has a second height H2 at the reaming part 22. The first height H1 is different from the second height H2 and the first height Hl is greater than zero and less than the second height H2, and the first thread 30 has a first thread outer diameter width W3, and the first thread outer diameter width W3 of the rod extension part 21 and the first thread outer diameter width W3 of the reaming part 22 are the same. That is, the first thread outer diameter width W3 at the rod extension part 21 and the first thread outer diameter width W3 at the reaming part 22 are the same. In the first embodiment, the rod body 20 is provided with one first thread 30, and the body 20 may be provided with no less than two first threads 30, without limitation. In addition, the first thread 30 has a first thread angle β1 at the reaming part 22 with the reaming part, and the first thread 30 has a second thread angle β2 at the taper 23. An angle of the first thread angle β1 is different from an angle of the second thread angle β2, wherein the first thread angle β1 is between about 30 degrees and 50 degrees, the first thread angle β1 of the first embodiment being 40 degrees, and the second thread angle β2 is between about 40 degrees and 60 degrees, the second thread angle β2 of the first embodiment being 50 degrees. The first thread 30 has an asymmetric structure.

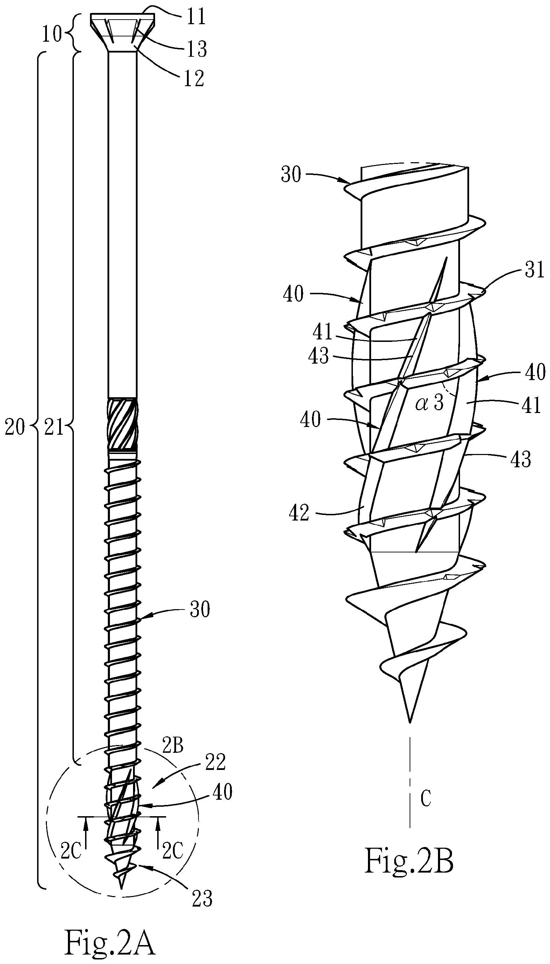

The crushing ribs 40 are provided on the outer peripheral surface of the rod body 20 at the reaming part 22. As shown in Fig. 2B to Fig. 2D, the first embodiment has four crushing ribs 40, each of which has a first side surface 41, a second side surface 42 and a ridge portion43 formed at the junction of the first side surface 41 and the second side surface 42. Each crushing rib 40 is spirally arranged on the outer peripheral surface of the reaming part 22 of the rod body 20 in a direction C parallel to an axis of the rod body 20, and the cross section of the ridge portion 43 has an arc shape, but is not limited thereto.

With regard to the third embodiment of the low-wear screw structure of the present disclosure, the first thread 30 at the reaming part 32 is provided with a plurality of saw-tooth cutting edges 31 at the outer periphery thereof, and the saw-tooth cutting edges 31 enable the reaming part 22 thereof to easily ream the wood workpiece when locked.

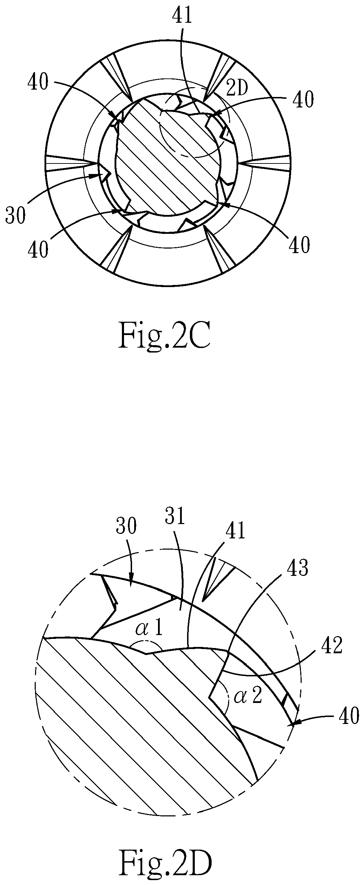

Here, again with reference to Fig. 2C and Fig. 2, a first included angle α1 is formed between the first side surface 41 of each crushing rib 40 and the outer peripheral surface of the rod body 20 form at the the cross section of the crushing rib 40 and the rod body 20. A second included angle α2 is formed between the second side surface 42 of each crushing rib 40 and the outer peripheral surface of the rod body 20 at the cross section of the crushing rib 40 and the rod body 20. The first included angle α1 is different from the second included angle α2, and the difference value between the first included angle α1 and the second included angle α2 is greater than or equal to 5 degrees. and less than or equal to 45 degrees. In the first embodiment, the difference between the first included angle α1 and the second included angle α2 is approximately 15 degrees, and the angle value of the first included angle α1 is greater than the angle value of the second included angle α2. The angle value of the first included angle α1 is between 30 degrees and 80 degrees, while the angle value of the second included angle α2 is between 5 and 30 degrees, whereby the generated chips are not easily accumulated at the reaming part 22 and can be quickly discharged and the wear of the first thread 30 is reduced as shown in Fig. 2B. Each crushing rib 40 is tapered to the rod body 20 at both ends.

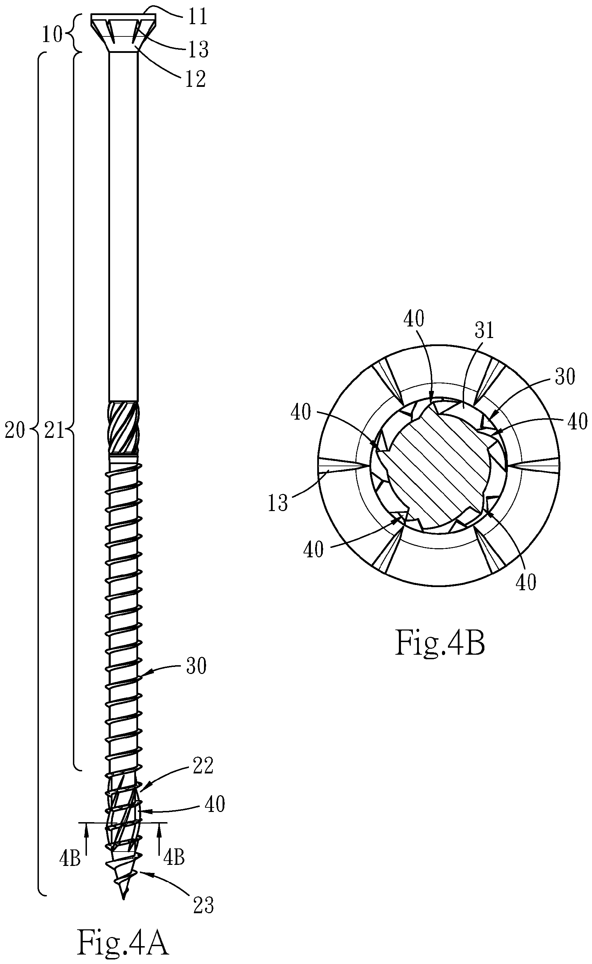

With reference to Fig. 4A to Fig. 4B, there is shown a second embodiment of the present disclosure, the main features and functions of which are the same as those of the first embodiment, and the main difference is that the second embodiment forms five crushing ribs 40 on the reaming part 22. A third included angle α3 is formed between the first side surface 41 of each crushing rib 40 and the outer peripheral surface of the first thread 30 at the reaming part 22 of the rod body 20, the third included angle α3 being less than 90 degrees and greater than zero degree. In addition, a user can form two crushing ribs 40, three crushing ribs 40, four crushing ribs 40, five crushing ribs 40, six crushing ribs 40, seven crushing ribs 40, eight crushing ribs 40 and the like on the outer peripheral surface of the reaming part 22 as required, without limitation. Further, a user may also provide an oblique thread (not numbered) on the outer peripheral surface of the rod extension part 21 between the first thread 30 and the neck 12 according to his or her needs, without affecting the structure and the resulting efficacy of the crushing rib 40 of the present disclosure.

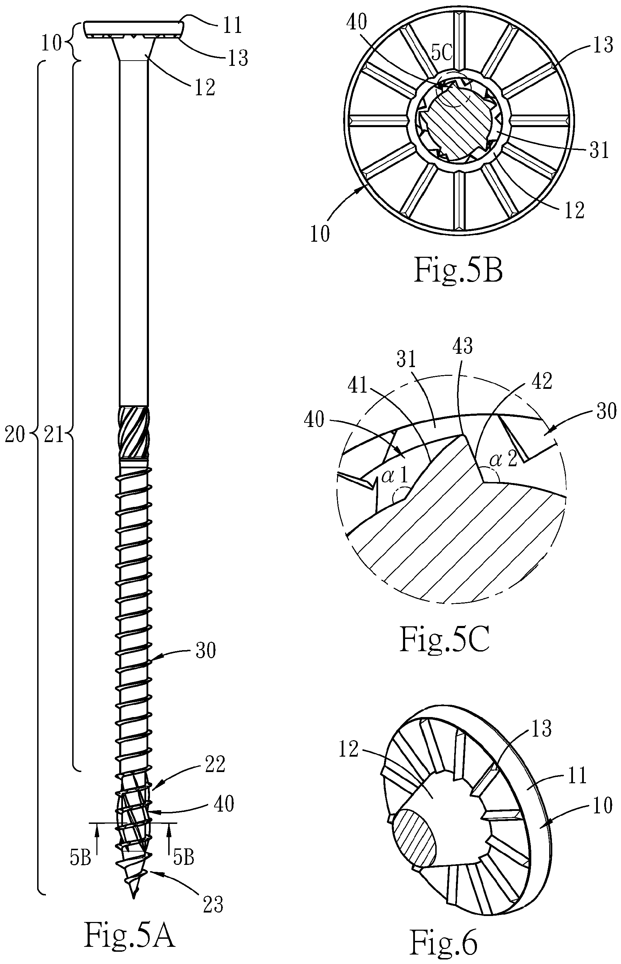

With reference to Fig. 5A to Fig. 6, there is shown a third embodiment of the present disclosure, the main features and functions of which are the same as those of the first embodiment and will not be described in detail. The main difference is that each crushing rib 40 of the reaming part 21 of the third embodiment is spirally arranged in an axial direction C of the rod body 20 in a counterclockwise direction. That is, the arrangement directions of the crushing ribs 40 and the rotation of the first thread 30 in the axial direction C of the rod body 20 are different, so that the third included angle α3 formed by the first side surface 41 of each crushing rib 40 and the outer peripheral surface of the first thread 30 on the reaming part 22 of the rod body 20 is greater than 90 degrees and less than 180 degrees.

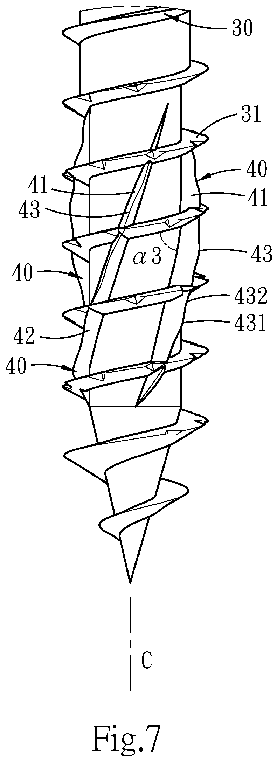

With reference to Fig. 7, there is shown a fourth embodiment of the present disclosure, the main features and functions of which are the same as those of the first embodiment and will not be described in detail. The main difference is that the ridge portion 43 of each crushing rib 40 of the fourth embodiment is provided with a plurality of peaks 431 and valleys 432 which are alternately arranged, and both ends of each crushing rib 40 are tapered to the rod body 20. The ridge portions 43 of each crushing ribs 40 are wavy so as to facilitate crushing and removal of chips generated.

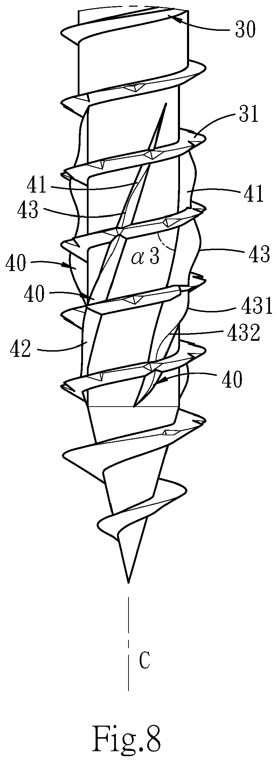

With reference to Fig. 8, there is shown a fifth embodiment of the present disclosure, the main features and functions of which are the same as those of the first embodiment and will not be described in detail. The main difference is that the ridge portion 43 of each crushing rib 40 of the fourth embodiment is provided with peaks 431 and valleys 432 which are alternately arranged. The height difference between the peaks 431 and the valleys 432 of the fifth embodiment is greater than the height difference between the peaks 431 and the valleys 432 of the fourth embodiment, whereby the ridge portions 43 of each crushing rib 40 are wavy to also facilitate crushing and removal of chips generated.

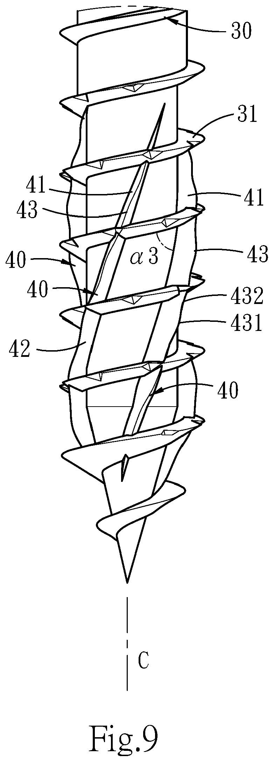

With reference to Fig. 9, there is shown a sixth embodiment of the present disclosure, the main features and functions of which are the same as those of the first embodiment and will not be described in detail. The main difference is that the ridge portion 43 of each crushing rib 40 of the sixth embodiment is provided with a plurality of peaks 431 and valleys 432 which are arranged alternately, and both ends of each crushing rib 40 are tapered to the rod body 20. The ridge portion 43 of each crushing rib 40 is wavy to facilitate crushing and removal of chips generated, and the crushing rib 40 extends to the taper part 23 so that generated chips are removed from the taper part 23.

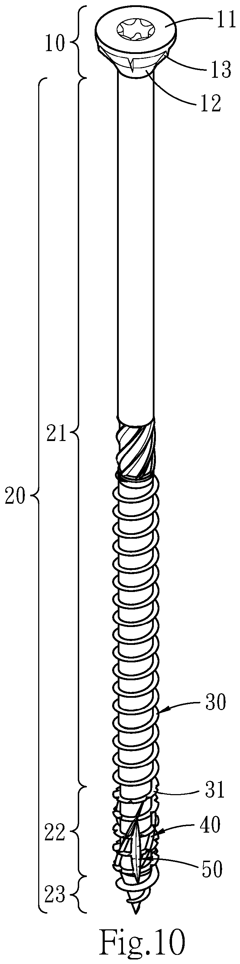

With reference to Fig. 10, there is shown a seventh embodiment of the present disclosure, the main features and functions of which are the same as those of the first embodiment and will not be described in detail. The main difference is that the ridge portion 43 of each crushing rib 40 of the seventh embodiment is provided with a plurality of peaks 431 and valleys 432 which are arranged alternately. The ridge portion 43 of each crushing rib 40 is wavy so as to facilitate crushing and removal of chips generated, and a quick chip removal groove 50 is formed at the reaming part 22 so that chips generated by the crushing process can be quickly discharged through the quick chip removal groove 50.

In summary, the first included angle α1 and the second included angle α2 of each crushing rib 40 of the low-wear screw structure of the present disclosure are different and the first included angle α1 is greater than the second included angle α2, so that chips located between the first threads 30 can be easily broken and crushed when a wooden workpiece is locked in. The torque force screwed in when the first threads 30 are locked is reduced, so that the abrasion of the first threads 30 can be reduced. Meanwhile, the first thread 30 is designed such that the first thread outer diameter width W3 of the first thread 30 is the same as that of the rod extension part 21 and the reaming part 22 with the diameter width of the first bottom diameter W1 of the rod extension part 21 being different from the diameter width of the second bottom diameter W2 of the reaming part 22, thereby allowing an operator to lock a wooden workpiece with little effort.

## Claims

1. A low-wear screw structure including:
a screw head (10) comprising a top (11) and a neck (12) extending from the top (11) and tapering away from the top (11);
a rod body (20) extending from the neck (12) of the screw head (10), wherein the rod body (20) comprises a rod extension part (21) connected to the neck (12), a reaming part (22) connected to the rod extension part (21) and a taper part (23) connected to an other side of the reaming part (22), wherein the rod extension part (21) is provided with a first bottom diameter (W1), and the reaming part (22) is provided with a second bottom diameter (W2);
a first thread (30) annularly arranged on an outer peripheral surface of the rod body (20) at a distance from the taper part (23) to the rod extension part (21) through the reaming part (22); and
at least a crushing rib (40), the crushing rib (40) being arranged on the outer peripheral surface of the rod body (20) at the reaming part (22), each crushing rib (40) being provided with a first side surface (41) and a second side surface (42); wherein
the first thread (30) is provided at the reaming part (22);
a first included angle (α1) is formed between the first side surface (41) of each crushing rib (40) and the outer peripheral surface of the rod body (20) at a cross section of the crushing rib (40) and the rod body (20),
a second included angle (α2) is formed between the second side surface (42) of each crushing rib (40) and the outer peripheral surface of the rod body (20) at a cross section of the crushing rib (40) and the rod body (20), and
the first included angle (α1) being different from the second included angle (α2);
**characterized in that**
the first thread (30) provided at the reaming part (22) is provided with a plurality of sawtooth cutting edges (31) at an outer periphery, wherein a diameter width of the first bottom diameter (W1) of the rod extension part (21) is different from a diameter width of the second bottom diameter (W2) of the reaming part (22), and the diameter width of the second bottom diameter (W2) is greater than zero and smaller than the diameter width of the first bottom diameter (W1).

2. The low-wear screw structure of claim 1, wherein the first thread (30) has a first height (H1) at the rod extension part (21) and the first thread (30) has a second height (H2) at the reaming part (22), the first height (H1) being different from the second height (H2), the first height (H1) being greater than zero and less than the second height (H2).

3. The low-wear screw structure of claim 1, wherein the first thread (30) has a first thread (30) outer diameter width (W3) that is the same as the reaming part (22) at the rod extension part (21).

4. The low-wear screw structure of any of the preceding claims, wherein each crushing rib (40) is spirally disposed on an outer peripheral surface of the reaming part (22) of the rod body (20) in a direction parallel to an axis of the rod body (20), and an angle value of the first included angle (α1) is greater than an angle value of the second included angle (α2).

5. The low-wear screw structure of any of the preceding claims, wherein a third included angle (α3) is formed between the first side surface (41) of each crushing rib (40) and the outer peripheral surface of the first thread (30) on the reaming part (22) of the rod body (20), the third included angle (α3) being less than 90 degrees and greater than zero degree.

6. The low-wear screw structure of any of the preceding claims, wherein each crushing rib (40) is provided with a ridge portion (43) formed at a junction of the first side surface (41) and the second side surface (42), the ridge portion (43) having an arc shape in cross section.

7. The low-wear screw structure of any of the preceding claims, wherein a difference between the first included angle (α1) and the second included angle (α2) is greater than or equal to 5 degrees and less than or equal to 45 degrees.

8. The low-wear screw structure of any of the preceding claim, wherein the first thread (30) has a first thread (30) angle at the reaming part (22) and the first thread (30) has a second thread angle at the taper part (23), an angle of the first thread (30) angle being different from an angle of the second thread angle.

9. The low-wear screw structure of any of the preceding claims, wherein each crushing rib (40) is provided with a ridge portion (43) provided with a plurality of peaks (431) and a plurality of valleys (432) which are alternately arranged so that the ridge portion (43) is wavy.

## Patentansprüche

1. Verschleißarme Schraubstruktur, umfassend:
einen Schraubenkopf (10) mit einem Kopf (11) und einem Hals (12), der sich von dem Kopf (11) aus erstreckt und sich ausgehend von dem Kopf (11) verjüngt
einen Schraubenkörper (20), der sich von dem Hals (12) des Schraubenkopfes (10) aus erstreckt, wobei der Schraubenkörper (20) einen mit dem Hals (12) verbundenen Schraubenkörper-Verlängerungsabschnitt (21), einen mit dem Schraubenkörper-Verlängerungsabschnitt (21) verbundenen Aufweitungsabschnitt (22) und einen mit einer anderen Seite des Aufweitungsabschnitts (22) verbundenen sich verjüngenden Abschnitt (23) umfasst, wobei der Schraubenkörper-Verlängerungsabschnitt (21) mit einem ersten unteren Durchmesser (W1) versehen ist und der Aufweitungsabschnitt (22) mit einem zweiten unteren Durchmesser (W2) versehen ist;
ein erstes Gewinde (30), das ringförmig auf einer äußeren Umfangsfläche des Schraubenkörpers (20) unter einem Abstand zu dem sich verjüngenden Abschnitt (23) zu dem Schraubenkörper-Verlängerungsabschnitt (21) durch das Aufweitungsabschnitt (22) angeordnet ist; und
mindestens eine Brechrippe (40), wobei die Brechrippe (40) an der äußeren Umfangsfläche des Schraubenkörpers (20) an dem Aufweitungsabschnitt (22) angeordnet ist, wobei jede Brechrippe (40) mit einer ersten Seitenfläche (41) und einer zweiten Seitenfläche (42) versehen ist; wobei
das erste Gewinde (30) an dem Aufweitungsabschnitt (22) vorgesehen ist;
ein erster eingeschlossener Winkel (α1) zwischen der ersten Seitenfläche (41) jeder Brechrippe (40) und der äußeren Umfangsfläche des Schraubenkörpers (20) in einem Querschnitt der Brechrippe (40) und des Schraubenkörpers (20) ausgebildet ist,
ein zweiter eingeschlossener Winkel (α2) zwischen der zweiten Seitenfläche (42) jeder Brechrippe (40) und der äußeren Umfangsfläche des Schraubenkörpers (20) in einem Querschnitt der Brechrippe (40) und des Schraubenkörpers (20) ausgebildet ist, und
der erste eingeschlossene Winkel (α1) von dem zweiten eingeschlossenen Winkel (α2) verschieden ist;
**dadurch gekennzeichnet, dass**
das erste Gewinde (30), das an dem Aufweitungsabschnitt (22) vorgesehen ist, mit einer Vielzahl von Sägezahnschneidkanten (31) an einem Außenumfang versehen ist, wobei eine Breite in Durchmesserrichtung des ersten unteren Durchmessers (W1) des Schraubenkörper-Verlängerungsabschnitts (21) von einer Breite in Durchmesserrichtung des zweiten unteren Durchmessers (W2) des Aufweitungsabschnitts (22) verschieden ist, und die Breite in Durchmesserrichtung des zweiten unteren Durchmessers (W2) größer als Null und kleiner als die Breite in Durchmesserrichtung des ersten unteren Durchmessers (W1) ist.

2. Verschleißarme Schraubstruktur nach Anspruch 1, wobei das erste Gewinde (30) eine erste Ganghöhe (H1) am Schraubenkörper-Verlängerungsabschnitt (21) aufweist und das erste Gewinde (30) eine zweite Ganghöhe (H2) am Aufweitungsabschnitt (22) aufweist, wobei sich die erste Ganghöhe (H1) von der zweiten Ganghöhe (H2) unterscheidet und die erste Ganghöhe (H1) größer als Null und kleiner als die zweite Ganghöhe (H2) ist.

3. Verschleißarme Schraubstruktur nach Anspruch 1, wobei das erste Gewinde (30) eine erste Gewinde (30)-Außendurchmesserbreite (W3) aufweist, die die gleiche ist wie die Breite des Aufweitungsabschnitts (22) am Schraubenkörper-Verlängerungsabschnitt (21).

4. Verschleißarme Schraubstruktur nach einem der vorhergehenden Ansprüche, wobei jede Brechrippe (40) spiralförmig auf einer äußeren Umfangsfläche des Aufweitungsabschnitts (22) des Schraubenkörpers (20) in einer Richtung parallel zu einer Achse des Schraubenkörpers (20) angeordnet ist und wobei ein Winkelwert des ersten eingeschlossenen Winkels (α1) größer ist als ein Winkelwert des zweiten eingeschlossenen Winkels (α2).

5. Verschleißarme Schraubstruktur nach einem der vorhergehenden Ansprüche, wobei ein dritter eingeschlossener Winkel (α3) zwischen der ersten Seitenfläche (41) jeder Brechrippe (40) und der äußeren Umfangsfläche des ersten Gewindes (30) auf dem Aufweitungsabschnitt (22) des Schraubenkörpers (20) ausgebildet ist, wobei der dritte eingeschlossene Winkel (α3) kleiner als 90 Grad und größer als Null Grad ist.

6. Verschleißarme Schraubstruktur nach einem der vorhergehenden Ansprüche, wobei jede Brechrippe (40) mit einem Stegabschnitt (43) versehen ist, der an einer Verbindung der ersten Seitenfläche (41) und der zweiten Seitenfläche (42) ausgebildet ist, wobei der Stegabschnitt (43) im Querschnitt eine Bogenform aufweist.

7. Verschleißarme Schraubstruktur nach einem der vorhergehenden Ansprüche, wobei eine Differenz zwischen dem ersten eingeschlossenen Winkel (α1) und dem zweiten eingeschlossenen Winkel (α2) größer als oder gleich 5 Grad und kleiner als oder gleich 45 Grad ist.

8. Verschleißarme Schraubstruktur nach einem der vorhergehenden Ansprüche, wobei das erste Gewinde (30) einen ersten Gewindewinkel (30) an dem Aufweitungsabschnitt (22) aufweist und das erste Gewinde (30) einen zweiten Gewindewinkel am Aufweitungsabschnitt (23) aufweist, wobei ein Winkel des ersten Gewindewinkels (30) sich von einem Winkel des zweiten Gewindewinkels unterscheidet.

9. Verschleißarme Schraubstruktur nach einem der vorhergehenden Ansprüche, wobei jede Brechrippe (40) mit einem Stegabschnitt (43) versehen ist, der mit einer Vielzahl von Spitzen (431) und einer Vielzahl von Tälern (432) versehen ist, die abwechselnd angeordnet sind, so dass der Stegabschnitt (43) wellig ist.

## Revendications

1. Une structure de vis à faible usure comprenant
une tête de vis (10) comprenant un chapeau (11) et un col (12) s'étendant à partir du chapeau (11) et se rétrécissant à partir du chapeau (11) ;
un corps de tige (20) s'étendant à partir du col (12) de la tête de vis (10), dans lequel le corps de tige (20) comprend une partie d'extension de tige (21) reliée au col (12), une partie d'alésage (22) reliée à la partie d'extension de tige (21) et une partie conique (23) reliée à un autre côté de la partie d'alésage (22), dans laquelle la partie d'extension de tige (21) est pourvue d'un premier diamètre inférieur (W1), et la partie d'alésage (22) est pourvue d'un second diamètre inférieur (W2) ;
un premier filet (30) disposé annulairement sur une surface périphérique extérieure du corps de la tige (20) à une distance allant de la partie conique (23) à la partie d'extension de la tige (21) en passant par la partie d'alésage (22) ; et
au moins une nervure d'écrasement (40), la nervure d'écrasement (40) étant disposée sur la surface périphérique extérieure du corps de la tige (20) au niveau de la partie d'alésage (22), chaque nervure d'écrasement (40) étant pourvue d'une première surface latérale (41) et d'une deuxième surface latérale (42) ; dans lequel
le premier filet (30) est fourni à la partie d'alésage (22) ;
un premier angle inclus (α1) est formé entre la première surface latérale (41) de chaque nervure d'écrasement (40) et la surface périphérique extérieure du corps de la tige (20) au niveau d'une section transversale de la nervure d'écrasement (40) et du corps de la tige (20),
un deuxième angle inclus (α2) est formé entre la deuxième surface latérale (42) de chaque nervure d'écrasement (40) et la surface périphérique extérieure du corps de la tige (20) au niveau d'une section transversale de la nervure d'écrasement (40) et du corps de la tige (20), et
le premier angle inclus (α1) est différent du deuxième angle inclus (α2) ;
**caractérisé par le fait que**
le premier filet (30) fourni à la partie d'alésage (22) est pourvu d'une pluralité d'arêtes de coupe en dents de scie (31) à une périphérie extérieure, dans laquelle une largeur de diamètre du premier diamètre inférieur (W1) de la partie d'extension de la tige (21) est différente d'une largeur de diamètre du deuxième diamètre inférieur (W2) de la partie d'alésage (22), et la largeur de diamètre du deuxième diamètre inférieur (W2) est supérieure à zéro et inférieure à la largeur de diamètre du premier diamètre inférieur (W1).

2. La structure de vis à faible usure selon la revendication 1, dans laquelle le premier filet (30) a une première hauteur (H1) au niveau de la partie d'extension de la tige (21) et le premier filet (30) a une deuxième hauteur (H2) au niveau de la partie d'alésage (22), la première hauteur (H1) étant différente de la deuxième hauteur (H2), la première hauteur (H1) étant supérieure à zéro et inférieure à la deuxième hauteur (H2).

3. La structure de vis à faible usure selon la revendication 1, dans laquelle le premier filet (30) a une largeur de diamètre extérieur (W3) du premier filet (30) qui est la même que de la partie d'alésage (22) au niveau de la partie d'extension de la tige (21).

4. La structure de vis à faible usure selon l'une quelconque des revendications précédentes, dans laquelle chaque nervure d'écrasement (40) est disposée en spirale sur une surface périphérique extérieure de la partie d'alésage (22) du corps de tige (20) dans une direction parallèle à un axe du corps de tige (20), et une valeur d'angle du premier angle inclus (α1) est supérieure à une valeur d'angle du deuxième angle inclus (α2).

5. La structure de vis à faible usure selon l'une quelconque des revendications précédentes, dans laquelle un troisième angle inclus (α3) est formé entre la première surface latérale (41) de chaque nervure d'écrasement (40) et la surface périphérique extérieure du premier filet (30) sur la partie d'alésage (22) du corps de tige (20), le troisième angle inclus (α3) étant inférieur à 90 degrés et supérieur à zéro degré.

6. La structure de vis à faible usure selon l'une quelconque des revendications précédentes, dans laquelle chaque nervure d'écrasement (40) est pourvue d'une partie de crête (43) formée à une jonction de la première surface latérale (41) et de la deuxième surface latérale (42), la partie de crête (43) ayant une forme d'arc en section transversale.

7. La structure de vis à faible usure selon l'une quelconque des revendications précédentes, dans laquelle une différence entre le premier angle inclus (α1) et le deuxième angle inclus (α2) est supérieure ou égale à 5 degrés et inférieure ou égale à 45 degrés.

8. La structure de vis à faible usure selon l'une quelconque des revendications précédentes, dans laquelle le premier filet (30) présente un premier angle de filet (30) au niveau de la partie d'alésage (22) et le premier filet (30) présente un deuxième angle de filet au niveau de la partie conique (23), un angle du premier filet (30) étant différent d'un angle du deuxième filet.

9. La structure de vis à faible usure selon l'une quelconque des revendications précédentes, dans laquelle chaque nervure d'écrasement (40) est pourvue d'une partie de crête (43) pourvue d'une pluralité de pics (431) et d'une pluralité de vallées (432) qui sont disposés en alternance de sorte que la partie de crête (43) est ondulée.
